# EUROPEAN PATENT SPECIFICATION

(11) **EP 2 862 831 B1**
(45) Date of publication and mention of the grant of the patent: **31.08.2016**
(21) Application number: 14397527.4
(22) Date of filing: 12.09.2014
(51) Int. Cl.: H02K 7/10, B66B 11/00, B66B 15/08, H02K 7/00

(54) **Elevator hoisting machine and an elevator installation**
Aufzugshebemaschine und Aufzugsanlage
Machine de levage d'ascenseur et systeme d'ascenseur

(30) Priority: 18.10.2013 FI 20136032
(43) Date of publication of application: 22.04.2015
(73) Proprietor: Kone Corporation, 00330 Helsinki (FI)
(72) Inventor: Purosto, Tero, 05810 Hyvinkää (FI); Aulanko, Esko, 04230 Kerava (FI); Hakala, Tero, 05820 Hyvinkää (FI)
(74) Representative: Berggren Oy Ab

(56) References cited:
- EP-A1- 2 567 924
- EP-A2- 1 448 470
- US-A1- 2009 218 898

## Description

### Field of the invention

The invention relates an elevator installation according to the preamble of claim 1. Such an installation is disclosed, e.g., by EP1448470.

### Background of the invention

It is a general aim to utilize built space as efficiently as possible. Owing to space requirements, it is in fact an aim to make the hoisting machines of elevators as compact as possible. In some cases it is endeavored to design the hoisting machine to be thin in the radial direction, so that it can be situated in the elevator hoistway more easily.

By increasing the speed of rotation of the hoisting machine, the output-to-volume ratio of the hoisting machine can be increased, in which case the size of the hoisting machine decreases. For example, the size of a coggedless hoisting machine can be reduced by reducing the radius of the traction sheave, in which case the speed of rotation of the hoisting machine increases.

The friction of the hoisting roping on the traction sheave also decreases when the traction sheave becomes smaller. The grip of the traction sheave can be improved by using a cogged wheel as a traction sheave; in this case a cogged belt is the hoisting roping of the elevator, the teeth of which belt are adapted to travel in the grooves of the cogged wheel. In this case the hoisting roping of the elevator is not able to slip on the traction sheave, e.g. during an emergency stop of the elevator, since the machinery brakes of the hoisting machine engage, when the elevator car moves, to brake the movement of the traction sheave. When the hoisting roping does not slip on the traction sheave, the deceleration of especially an upward-moving elevator car increases to be unnecessarily large in connection with an emergency stop.

Also known in the art are so-called counterweightless elevators, wherein the space available for the elevator car has been increased by leaving out the counterweight entirely. In this case a larger elevator car can be fitted into the same elevator hoistway or, on the other hand, an elevator car can be fitted into an elevator hoistway that is smaller in cross-sectional area than before.

The selected cross-sectional area of the elevator car and also the cross-sectional area reserved for the elevator hoistway in the building vary from one building/elevator installation to another. In the case of counterweightless elevators, the space reservation for the elevator cannot be adjusted by changing the size/shape of the counterweight. Consequently, it would be advantageous to find a solution wherein the hoisting mechanics of a counterweightless elevator in an elevator hoistway could be more easily adapted to the space requirements set by different elevator cars/elevator hoistways.

### Aim of the invention

The aim of the invention is to solve the aforementioned problems as well as the problems disclosed in the description below.

### Summary of the invention

According to the invention, this aim is achieved by an elevator installation comprising all the features of independent claim 1.

Preferred embodiments are described in the dependent claims.

One aspect is a coggedless hoisting machine of an elevator, said hoisting machine comprising a machine frame, inside which is an electric motor comprising a concentric stator and rotor. The rotor comprises permanent magnets, the magnetic flux produced by which crosses the air gap between the rotor and the stator in essentially the radial direction. The rotor is attached to a rotating shaft, which continues to outside the machine frame from both ends of the machine frame, and on both ends of the rotating shaft are traction sheaves for receiving the hoisting roping of the elevator. Consequently, two ropings (belts) can be pulled with the hoisting machine, which ropings are disposed at a distance, determined by the shaft, from each other. The hoisting machine is also implemented with a permanent-magnet motor, more particularly a permanent-magnet synchronous motor, which simultaneously enables both low torque ripple and high torque as well as good controllability.

In a further developed embodiment the aforementioned traction sheaves are cogged wheels, and the hoisting roping comprises at least two cogged belts, which are adapted to travel on the aforementioned cogged wheels, each separately on opposite sides of the machine frame.

According to the invention, the rotating shaft is a telescopic shaft, the length of which is adjustable. This means that the distance between the traction sheaves on the ends of the shaft is adjustable, in which case the distance between traction sheaves, and at the same time the position of the hoisting roping in the elevator hoistway, can be adjusted for the specific elevator. In this case the center distance/the distance between traction sheaves can be adjusted e.g. on the basis of the width of the elevator car or the width of the elevator hoistway in such a way that the hoisting roping travels in the proximity of the opposite side walls of the elevator hoistway, being fixed to opposite side walls of the elevator car or to diverting pulleys fixed to the side walls. In this case the width of the elevator hoistway can be utilized as efficiently as possible for the use of the elevator installation.

According to the invention, the machine frame is mounted with bearings onto the rotating shaft.

According to the invention, the length of the rotating shaft is adapted to be adjustable only on the one side of the machine frame. This means that the length of the rotating shaft, and at the same time the distance between traction sheaves, can be changed by adjusting the shaft at only one point in such a way that the length of the shaft can be changed only on the one side of the machine frame, i.e. the length of the shaft is constant on the other side of the machine frame.

According to the invention, the hoisting machine comprises a machinery brake, which comprises a frame part and an armature part movably supported on the frame part. In one variation the frame part of the brake is mounted with bearings onto the rotating shaft of the hoisting machine.

A preferred embodiment is an elevator installation, which comprises a hoisting machine according to the description for driving the elevator car in the elevator hoistway. The elevator installation comprises a fixing framework for fixing the hoisting machine to a support structure of the elevator. In this case the fixing framework can be a part of the steel framework, inside which the elevator car travels. The guide rails of the elevator car can also be fixed to the steel framework, which guide rails determine the path of movement of the elevator car traveling inside the steel framework. This type of solution is modular, can be quickly assembled, and is also easy to dispose in an existing elevator hoistway.

According to the invention, a brake disc is attached to the rotating shaft of the hoisting machine, and the machinery brake is fitted into connection with the brake disc in such a way that the armature part is adapted to optionally engage with the aforementioned brake disc for braking the elevator car and also to release the aforementioned brake disc for moving the elevator car. According to the invention, the machinery brake and also the brake disc are disposed on the rotating shaft of the hoisting machine, on the opposite side of the machine frame than the side of the adjustable part of the rotating shaft of the hoisting machine. In this case the braking forces of the hoisting machine are exerted primarily on the solid part of the rotating shaft, and not on the adjustable part/adjustment means of the rotating shaft, which solution improves the durability of the rotating shaft.

In a further developed embodiment the frame part of the brake of the hoisting machine is fixed to the machine frame. In one variation the frame part of the brake is situated in connection with the machine frame on the rotating shaft of the hoisting machine in such a way that the rotating shaft travels through the brake. In a further developed embodiment the machine frame is further fixed to the fixing framework via a force sensor.

In a further developed embodiment the machine frame is fixed to the force sensor with an elastic damping means, which is pretensioned.

In a further developed embodiment the machine frame is fixed to the fixing framework via a force sensor in such a way that the braking force is transmitted via the machinery brake into the machine frame and onwards via the force sensor into the fixing framework. In a further developed embodiment the force sensor is fixed to the opposite side of the machine frame than that on which the adjustable part of the rotating shaft of the hoisting machine is situated. In this case the braking forces of the hoisting machine are exerted on the fixing framework primarily via the solid part of the rotating shaft, which solution improves the durability of the rotating shaft.

In a further developed embodiment the length of the shaft of the hoisting machine is determined on the basis of the width of the elevator car.

In a further developed embodiment the elevator installation is an elevator installation without counterweight. A counterweightless elevator installation improves space-efficiency, in which case a larger elevator car than before in terms of its floor area fits into the elevator hoistway.

The counterweightless elevator installation according to the description is well suited to sites requiring space efficiency, such as in buildings and ships. The elevator installation according to the description is also well suited in solutions in which an elevator installation is modernized by installing an elevator installation according to the description into an existing elevator hoistway, in which case the floor surface area of the elevator car can be increased by leaving the counterweight out.

The preceding summary, as well as the additional features and additional advantages of the invention presented hereinafter, will be better understood by the aid of the following description of some embodiments, said description not limiting the scope of application of the invention.

### Brief explanation of the figures

- Fig. 1a: presents one hoisting machine according to an embodiment of the invention.
- Fig. 1b: presents the hoisting machine of Fig. 1a and more particularly the rotating shaft of the hoisting machine as viewed from a second direction.
- Fig. 2: presents one elevator installation according to a first embodiment of the invention.
- Fig. 3: presents one elevator installation according to a second embodiment of the invention.

### More detailed description of preferred embodiments of the invention

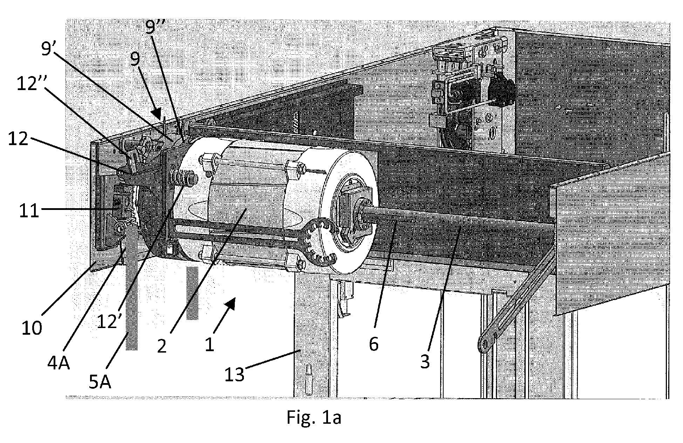

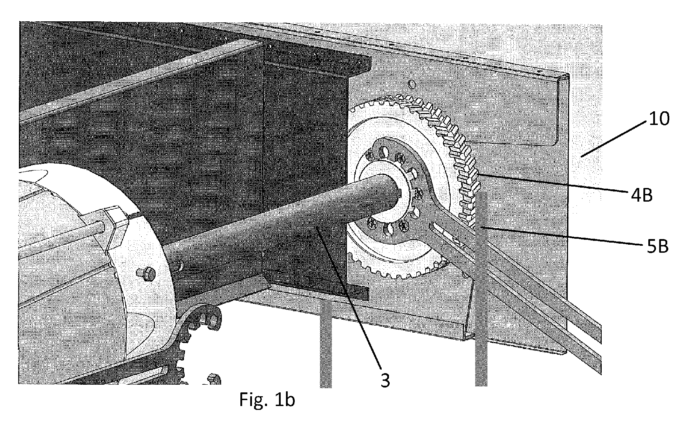

For the sake of clarity, Figs. 1 - 3 endeavor to present only the features that are essential from the viewpoint of understanding the invention. Consequently e.g. some generally known parts belonging to an elevator are not necessarily presented in the figures if the presentation of them is not significant from the viewpoint of understanding the invention.

In the description the same reference numbers are always used for the same parts and functions.

Figs. 1a and 1b present a coggedless hoisting machine 1 of an elevator, viewed from different directions. The hoisting machine 1 comprises a machine frame 2, inside which is an electric motor comprising a concentric stator and rotor. The electric motor is an internal rotor motor, i.e. the rotor is situated inside the stator. The motor is also a permanently-magnetized radial flux motor, in which rotor are permanent magnets, the magnetic flux brought about by which crosses the air gap between the rotor and the stator in essentially the radial direction. The rotor is attached to the rotating shaft 3 of the hoisting machine 1, which shaft continues to outside the machine frame 2 from both ends of the machine frame 2. A cogged wheel 4A, 4B is on both ends of the rotating shaft 3. A separate cogged belt 5A, 5B travels via each cogged wheel 4A, 4B, both of which cogged belts 5A, 5B are engaged with the same elevator car. The elevator car is driven by rotating with the permanent-magnet motor the shaft 3, which rotates the cogged wheels 4A, 4B, which pull the cogged belts 5A, 5B moving at the same time the elevator car.

The rotating shaft 3 of the hoisting machine 1 is telescopic, and its length can be adjusted by moving the shaft along a groove 6. The shaft 3 is fixed into position at its butt end with a cone clamp, or with another solution known by a person skilled in the art, from inside the machine frame 2 after the length of the shaft 3 has been adjusted to be correct. As a result of the solution, the distance between the cogged wheels 4A, 4B on the ends of the shaft 3 is adjustable, in which case the distance between the cogged wheels 4A, 4B and at the same time the position of the cogged belts 5A, 5B in the elevator hoistway can be adjusted for the specific elevator. Adjustment of the length of the shaft 3 occurs on only the one side of the machine frame 2, and on the other side of the machine frame 2 the shaft is of a standard dimension and does not include an adjustment means 6.

The hoisting machine 1 further comprises a machinery brake 9, which is of a type generally used in the industry, comprising a frame part 9' and an armature part movably supported on the frame part, which armature part remains inside the frame part 9'. The frame part 9' is fixed to the machine frame 2 with a fixing part 9".

A brake disc is attached to the rotating shaft 3 of the hoisting machine, which brake disc is disposed on the shaft of the machinery brake situated inside the frame part 9', in which case the shaft 3 of the hoisting machine travels though the machinery brake 9. The armature part of the machinery brake 9 is adapted to optionally engage with the aforementioned brake disc for braking the cogged wheels 4A, 4B/elevator car and also to release the aforementioned brake disc, in which case the cogged wheels 4A, 4B/elevator car can move freely. The discoid armature part is of two parts for safety reasons, in which case if one part fails the other part is still able to brake the shaft 3. As seen from Figs. 1a, 1b, the machinery brake 9 and also the brake disc are disposed on the rotating shaft 3 of the hoisting machine, on the opposite side of the machine frame 2 than the side of the adjustable part of the rotating shaft 3 of the hoisting machine. The part of the shaft 3 on the brake 9 side is also essentially shorter than on the other side of the machine frame 2. In this case the braking forces of the hoisting machine are exerted primarily on the shorter solid part of the rotating shaft 3 and not on the longer adjustable part/adjustment means of the rotating shaft 3, which solution improves the durability of the rotating shaft 3.

The machine frame 2 is fixed to the fixing framework 10 in the elevator installation, which fixing framework is a part of the steel framework 11 of the elevator hoistway. The steel framework 11 forms the frame of the elevator hoistway, inside which the elevator car travels. The fixing of the machine frame 2 to the fixing framework 10 occurs via a force sensor 11, more precisely via a strain gauge in such a way that the braking force is transmitted via the machinery brake 9 into the machine frame 2 and onwards via the force sensor 11 into the fixing framework 10. According to Figs. 1a and 1b, the force sensor 11 is fixed to the side of the shorter solid shaft 3, i.e. to the same side of the machine frame 2 as that on which the machinery brake 9 is situated. Consequently, the force effect being transmitted from the cogged wheels 4A, 4B via the rotating shaft 3 to the machinery brake 9 is directly measurable with the force sensor 11. By means of the force sensor 11 the force difference acting in the cogged belts 5A, 5B on the different sides of the cogged wheels 4A, 4B can be measured, both when driving with the elevator and during a standstill of the elevator, when the machinery brake 9 keeps the elevator car in its position in the elevator hoistway.

In one variation the machine frame 2 is fixed to the force sensor 11 with a separate damping means 12, which is marked in Fig. 1a. The damping means comprises a pretensioned steel spring 12', which presses the damping means 12 against the machine frame 2 with a force that keeps the damping means attached to the machine frame 2 by its whole contact surface, as presented in Fig. 1a. If the force being exerted on the damping means 12 in the direction of rotation increases to be sufficiently high e.g. during an emergency stop, the contact surface of the damping means 12 finally detaches from the machine frame 2 and the damping means 12 starts to turn around its corner point in relation to the machine frame 2 in such a way that the spring 12' is compressed further until the limiting means 12" finally stops the movement of the damping means. In this way a damping means 12 that gives way slightly limits the sudden deceleration of an emergency stop of the elevator car if the deceleration threatens to increase to be unnecessarily large.

In another variation the machine frame 2 is fixed directly to the force sensor 11 without the aforementioned damping means 12. In this way the fixing of the hoisting machine can, on the other hand, be stiffened, thus improving *inter alia* management of the movement of the hoisting machine.

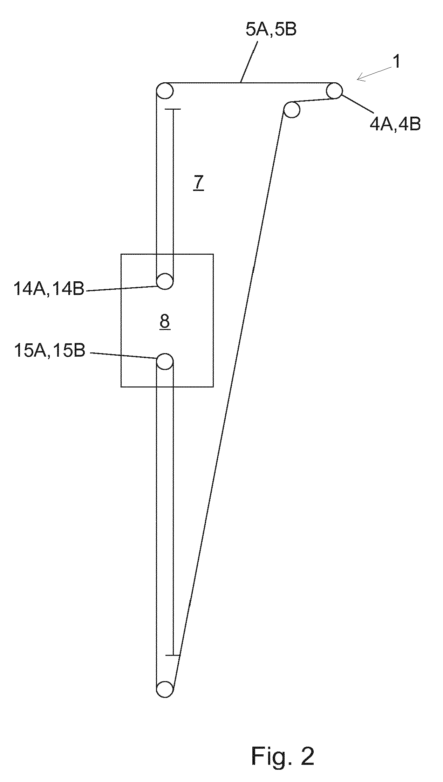

Fig. 2 presents a side view of the roping in a counterweightless elevator installation, in which installation is an elevator hoisting machine 1 according to Figs. 1a, 1b. The ends of the parallel cogged belts 5A, 5B are fixed to a stationary structure of the elevator installation in such a way that the first ends of the cogged belts 5A, 5B are fixed in the top part of the elevator hoistway 7 and the second ends are fixed in the bottom part of the elevator hoistway 7. The hoisting machine 1 is fixed to a fixing framework 10, which extends to above the topmost floor in such a way that the hoisting machine 1 can be serviced from the topmost floor.

The length of the rotating shaft 3 of the hoisting machine is determined on the basis of the width of the elevator car 8, in such a way that the cogged belts 5A, 5B travel in the proximity of the opposite side walls of the elevator hoistway 7 and to the sling of the elevator car via diverting pulleys fixed into connection with the side walls of the elevator car 8. Before taking the elevator into use, the cogged belts 5A, 5B are tensioned to be taut, so that they stay in position during a run with the elevator. Via the diverting pulleys 14A, 14B on the top part of the side walls the cogged belts 5A, 5B continue towards the top part of the elevator hoistway 7, and via the diverting pulleys 15A, 15B on the bottom part of the side walls the cogged belts 5A, 5B continue towards the bottom part of the elevator hoistway 7 in such a way that an upward support force is exerted on the elevator car 8 via the diverting pulleys 14A, 14B of the top part, and a downward support force is exerted on the elevator car 8 via the diverting pulleys 15A, 15B of the bottom part.

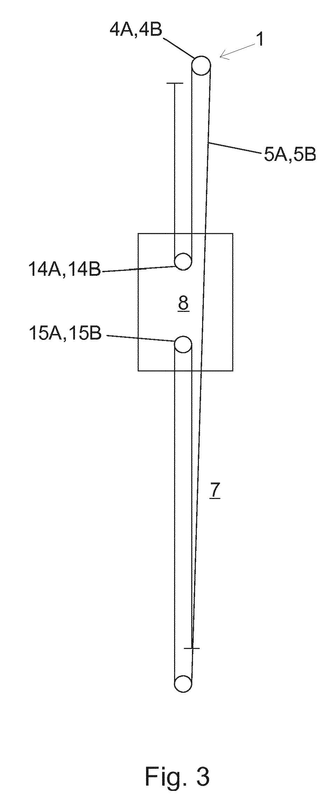

Fig. 3 presents a side view of the roping in a counterweightless elevator installation, in which installation is a hoisting machine 1 according to Figs. 1a, 1b. The elevator installation of Fig. 3 differs from the elevator installation of Fig. 2 in such a way that the hoisting machine is fixed to a fixing framework 10 in the top part of the elevator hoistway 7 above the vertical path of movement of the elevator car 8. The rotating shaft 3 of the hoisting machine 1 continues across the elevator hoistway 7 in such a way that the cogged wheels 5A, 5B of the hoisting machine are situated on opposite sides of the elevator car 8. Since the hoisting machine 1 in the elevator installation of Fig. 3 is disposed directly above the path of movement of the elevator car 8, a space reservation in connection with a floor level for the hoisting machine 1 is not needed, as it is in the elevator installation of Fig. 2.

The invention is not only limited to be applied to the embodiments described above, but instead many variations are possible within the scope of the claims.

## Claims

1. An elevator installation comprising:
a hoisting machine (1) for driving an elevator car (8) in an elevator hoistway (7);
a fixing framework (10) for fixing the hoisting machine (1) to a support structure (12) of the elevator;
and wherein the hoisting machine (1) comprises a machine frame (2), inside which is an electric motor comprising a concentric stator and rotor;
which
rotor is attached to a rotating shaft (3), which continues to outside the machine frame (2) from both ends of the machine frame (2);
and on both ends of the rotating shaft (3) are traction sheaves (4A, 4B) for receiving the hoisting roping (5A, 5B) of the elevator;
wherein a brake disc is attached to the rotating shaft (3) of the hoisting machine;
and wherein the hoisting machine comprises a machinery brake (9), which comprises a frame part (9') and an armature part movably supported on the frame part (9');
wherein the machinery brake (9) is fitted into connection with the brake disc in such a way that the armature part is adapted to optionally engage with the aforementioned brake disc for braking the elevator car and also to release the aforementioned brake disc for moving the elevator car;
**characterized in that**
the rotor comprises permanent magnets, the magnetic flux produced by which crosses the air gap between the rotor and the stator in essentially the radial direction;
and **in that** the rotating shaft (3) is a telescopic shaft, the length of which is adjustable;
and **in that** the length of the rotating shaft (3) is adapted to be adjustable only on the one side of the machine frame,
and **in that** the machinery brake (9) and also the brake disc are disposed on the rotating shaft (3) of the hoisting machine, on the opposite side of the machine frame (2) than the side of the adjustable part of the rotating shaft of the hoisting machine.

2. The elevator installation according to claim 1, **characterized in that** the traction sheaves (4A, 4B) are cogged wheels, and **in that** the hoisting roping comprises at least two cogged belts (5A, 5B), which are adapted to travel on the aforementioned cogged wheels on opposite sides of the machine frame (2).

3. The elevator installation according to any of the preceding claims, **characterized in that** the rotating shaft (3) continues across the elevator hoistway (7) in such a way that the traction sheaves (5A, 5B) are situated on opposite sides of the elevator car (8).

4. The elevator installation according to any of the preceding claims, **characterized in that** the frame part (9') of the brake of the hoisting machine is fixed to the machine frame (2);
and **in that** the machine frame (2) is further fixed to the fixing framework (10) via a force sensor (11).

5. The elevator installation according to claim 4, **characterized in that** the machine frame (2) is fixed to the force sensor (11) with an elastic damping means (12), which is pretensioned.

6. The elevator installation according to claim 4 or 5, **characterized in that** the machine frame (2) is further fixed to the fixing framework (10) via a force sensor (11) in such a way that the braking force is transmitted via the machinery brake (9) into the machine frame (2) and onwards via the force sensor (11) into the fixing framework (10).

7. The elevator installation according to any of the preceding claims, **characterized in that** the length of the shaft (3) of the hoisting machine is determined on the basis of the width of the elevator car (8).

8. The elevator installation according to any of the preceding claims, **characterized in that** the elevator installation is an elevator installation without counterweight.

## Patentansprüche

1. Aufzugsanlage, umfassend:
eine Hebemaschine (1) zum Antreiben einer Aufzugskabine (8) in einem Aufzugsschacht (7);
ein Befestigungsgerüst (10) zum Befestigen der Hebemaschine (1) an einer Stützstruktur (12) des Aufzugs;
und wobei die Hebemaschine (1) einen Maschinenrahmen (2) umfasst, in dessen Inneren sich ein Elektromotor befindet, der einen konzentrischen Stator und einen Rotor umfasst;
wobei der Rotor an einer Drehwelle (3) befestigt ist, die sich von beiden Enden des Maschinenrahmens (2) zur Außenseite des Maschinenrahmens (2) erstreckt;
und an beiden Enden der Drehwelle (3) Treibscheiben (4A, 4B) zum Aufnehmen der Hebeseile (5A, 5B) des Aufzugs vorhanden sind;
wobei eine Bremsscheibe an der Drehwelle (3) der Hebemaschine befestigt ist;
und wobei die Hebemaschine eine Maschinenbremse (9) umfasst, die ein Rahmenteil (9') und ein Armaturenteil umfasst, das beweglich an dem Rahmenteil (9') gelagert ist;
wobei die Maschinenbremse (9) in Verbindung mit der Bremsscheibe derart eingepasst ist, dass das Armaturenteil ausgelegt ist, wahlweise mit der oben erwähnten Bremsscheibe in Eingriff zu gelangen, um die Aufzugskabine abzubremsen und auch die oben erwähnte Bremsscheibe zum Bewegen der Aufzugskabine zu lösen;
**dadurch gekennzeichnet, dass**
der Rotor Permanentmagneten umfasst, wobei der von diesen erzeugte magnetische Fluss den Luftspalt zwischen dem Rotor und dem Stator in der im Wesentlichen radialen Richtung durchquert;
und dadurch, dass die Drehwelle (3) eine Teleskopwelle ist, deren Länge verstellbar ist;
und dadurch, dass die Länge der Drehwelle (3) ausgelegt ist, nur auf der einen Seite des Maschinenrahmens verstellbar zu sein,
und dadurch, dass die Maschinenbremse (9) und auch die Bremsscheibe auf der Drehwelle (3) der Hebemaschine auf der Seite des Maschinenrahmens (2) angeordnet sind, die der Seite des verstellbaren Teils der Drehwelle der Hebemaschine gegenüberliegt.

2. Aufzugsanlage nach Anspruch 1, **dadurch gekennzeichnet, dass** die Treibscheiben (4A, 4B) Zahnräder sind und dadurch, dass die Hebeseile mindestens zwei Zahnriemen (5A, 5B) umfassen, die ausgelegt sind, sich auf den oben erwähnten Zahnrädern auf gegenüberliegenden Seiten des Maschinenrahmens (2) fortzubewegen.

3. Aufzugsanlage nach einem der vorhergehenden Ansprüche,
**dadurch gekennzeichnet, dass** sich die Drehwelle (3) über den Aufzugsschacht (7) derart erstreckt, dass sich die Treibscheiben (5A, 5B) auf gegenüberliegenden Seiten der Aufzugskabine (8) befinden.

4. Aufzugsanlage nach einem der vorhergehenden Ansprüche,
**dadurch gekennzeichnet, dass** das Rahmenteil (9') der Bremse der Hebemaschine an dem Maschinenrahmen (2) befestigt ist;
und dadurch, dass der Maschinenrahmen (2) ferner durch einen Kraftsensor (11) an dem Befestigungsgerüst (10) befestigt ist.

5. Aufzugsanlage nach Anspruch 4, **dadurch gekennzeichnet, dass** der Maschinenrahmen (2) an dem Kraftsensor (11) mit einem elastischen Dämpfungsmittel (12) befestigt ist, das vorgespannt ist.

6. Aufzugsanlage nach Anspruch 4 oder 5, **dadurch gekennzeichnet, dass** der Maschinenrahmen (2) ferner über einen Kraftsensor (11) an dem Befestigungsgerüst (10) derart befestigt ist, dass die Bremskraft über die Maschinenbremse (9) in den Maschinenrahmen (2) und weiter über den Kraftsensor (11) in das Befestigungsgerüst (10) übertragen wird.

7. Aufzugsanlage nach einem der vorhergehenden Ansprüche, **dadurch gekennzeichnet, dass** die Länge der Welle (3) der Hebemaschine auf Grundlage der Breite der Aufzugskabine (8) bestimmt wird.

8. Aufzugsanlage nach einem der vorhergehenden Ansprüche, **dadurch gekennzeichnet, dass** die Aufzugsanlage eine Aufzugsanlage ohne Gegengewicht ist.

## Revendications

1. Installation d'ascenseur comprenant :
une machine de levage (1) servant à entraîner une cabine d'ascenseur (8) dans une cage d'ascenseur (7) ;
un cadre de fixation (10) servant à fixer la machine de levage (1) à une structure de support (12) de l'ascenseur ;
et la machine de levage (1) comprenant un châssis de machine (2), à l'intérieur duquel se trouve un moteur électrique comprenant un ensemble stator et
rotor concentrique ; ledit rotor étant attaché à un arbre rotatif (3), qui s'étend au-delà du châssis de machine (2) à partir des deux extrémités du châssis de machine (2) ; et des poulies de traction (4A, 4B) se trouvant aux deux extrémités de l'arbre rotatif (3), celles-ci servant à recevoir le câble de levage (5A, 5B) de l'ascenseur ;
un disque de frein étant attaché à l'arbre rotatif (3) de la machine de levage ;
et la machine de levage comprenant un frein de machinerie (9), qui comprend une partie châssis (9') et une partie armature supportée de manière mobile sur la partie châssis (9') ;
le frein de machinerie (9) étant installé en raccordement avec le disque de frein de telle sorte que la partie armature puisse éventuellement interagir avec ledit disque de frein pour le freinage de la cabine d'ascenseur et également libérer ledit disque de frein pour le déplacement de la cabine d'ascenseur ;
**caractérisée en ce que**
le rotor comprend des aimants permanents, le flux magnétique produit par ceux-ci traversant l'entrefer entre le rotor et le stator essentiellement dans la direction radiale ;
et **en ce que** l'arbre rotatif (3) est un arbre télescopique, dont la longueur est réglable ;
et **en ce que** la longueur de l'arbre rotatif (3) est prévue pour être réglable uniquement sur un côté du châssis de machine,
et **en ce que** le frein de machinerie (9) et
également le disque de frein sont disposés sur l'arbre rotatif (3) de la machine de levage, sur le côté opposé du châssis de machine (2) par rapport au côté de la partie réglable de l'arbre rotatif de la machine de levage.

2. Installation d'ascenseur selon la revendication 1, **caractérisée en ce que** les poulies de traction (4A, 4B) sont des roues dentées, et **en ce que** le câble de levage comprend au moins deux courroies crantées (5A, 5B), qui sont conçues pour se déplacer sur lesdites roues dentées sur des côtés opposés du châssis de machine (2).

3. Installation d'ascenseur selon l'une quelconque des revendications précédentes, **caractérisée en ce que** l'arbre rotatif (3) s'étend en travers de la cage d'ascenseur (7) de telle sorte que les poulies de traction (5A, 5B) soient situées sur des côtés opposés de la cabine d'ascenseur (8).

4. Installation d'ascenseur selon l'une quelconque des revendications précédentes, **caractérisée en ce que** la partie châssis (9') du frein de la machine de levage est fixée au châssis de machine (2) ;
et **en ce que** le châssis de machine (2) est en outre fixé au cadre de fixation (10) par le biais d'un capteur de force (11).

5. Installation d'ascenseur selon la revendication 4, **caractérisée en ce que** le châssis de machine (2) est fixé au capteur de force (11) avec un moyen d'amortissement élastique (12), auquel est imprimée une tension préalable.

6. Installation d'ascenseur selon la revendication 4 ou 5, **caractérisée en ce que** le châssis de machine (2) est en outre fixé au cadre de fixation (10) par le biais d'un capteur de force (11) de telle sorte que la force de freinage soit transmise, par l'intermédiaire du frein de machinerie (9), dans le châssis de machine (2) et ensuite, par l'intermédiaire du capteur de force (11), dans le cadre de fixation (10).

7. Installation d'ascenseur selon l'une quelconque des revendications précédentes, **caractérisée en ce que** la longueur de l'arbre (3) de la machine de levage est déterminée en fonction de la largeur de la cabine d'ascenseur (8).

8. Installation d'ascenseur selon l'une quelconque des revendications précédentes, **caractérisée en ce que** l'installation d'ascenseur est une installation d'ascenseur sans contrepoids.
